# EUROPÄISCHE PATENTSCHRIFT

(11) **EP 3 427 174 B1**
(45) Veröffentlichungstag und Bekanntmachung des Hinweises auf die Patenterteilung: **10.03.2021**
(21) Anmeldenummer: 17715648.6
(22) Anmeldetag: 28.03.2017
(51) Int. Cl.: G06F 21/44, H04L 29/06, H04L 9/32, H04W 12/10

(54) **VERFAHREN UND VORRICHTUNGEN ZUM AUTHENTISIEREN EINES DATENSTROMS**
METHOD AND APPARATUSES FOR AUTHENTICATING A DATA STREAM
PROCÉDÉ ET DISPOSITIFS D'AUTHENTIFICATION D'UN FLUX DE DONNÉES

(30) Priorität: 03.05.2016 DE 102016207642
(43) Veröffentlichungstag der Anmeldung: 16.01.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2017/057283
(87) Internationale Veröffentlichungsnummer: WO 2017/190890

(56) Entgegenhaltungen:
- WO-A1-2009/122165
- WO-A1-2015/018594
- US-B2- 8 904 183
- CHALLAL Y ET AL: "A taxonomy of multicast data origin authentication: Issues and solutions", IEEE COMMUNICATIONS SURVEYS AND TUTORIALS, INSTITUTE OF ELECTRICAL AND ELECTRONICS ENGINEERS, US, Bd. 2, Nr. 3, 1. Juli 2004 (2004-07-01), Seiten 34-57, XP011285495, ISSN: 1553-877X
- SENCUN ZHU ET AL: "LEAP: Efficient Security Mechanisms for LargeScale Distributed Sensor Networks", ACM TRANSACTIONS ON SENSOR NETWORKS, Bd. 2, Nr. 4, 1. November 2006 (2006-11-01), Seiten 500-528, XP055295131, 2 Penn Plaza, Suite 701 New York NY 10121-0701 USA ISSN: 1550-4859, DOI: 10.1145/1218556.1218559

## Beschreibung

Die Erfindung bezieht sich auf ein Verfahren und Vorrichtungen zur Absicherung einer Nachrichtenübertragung.

Bei einer Übertragung von Nachrichten über ein Kommunikationsnetzwerk besteht die Gefährdung, dass die übertragenen Nachrichten manipuliert werden, indem die Kommunikationsverbindung von einem Unberechtigten übernommen oder die Nachrichten manipuliert werden. Deshalb besteht ein Bedarf dahingehend, die Authentizität eines Senders zu überprüfen und/oder die Integrität der Nachrichten zu überprüfen.

Aus dem Stand der Technik sind das Dokument US 8,531,247 B2, das Dokument US 8,892,616 B2, das Dokument US 8,300,811 B2, das Dokument US 9,147,088 B2, das Dokument EP 2 605 445 B1, das Dokument EP 2 870 565 A1, das Dokument EP 2 891 102 A1, das Dokument WO 2009/122165 A1 und das Dokument US 8 843 761 B2 bekannt.

Eine Aufgabe der vorliegenden Erfindung ist es, ein Verfahren und Vorrichtungen bereitzustellen, die es erlauben, eine Prüfung der Integrität der Nachrichten und/oder Authentizität des Nachrichtensenders durchzuführen.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren zum Erzeugen eines Datenstroms, dessen Sender authentisierbar ist, mit den Verfahrensschritten:
- Berechnen mindestens einer ersten Authentisierungsinformation, wobei die mindestens eine erste Authentisierungsinformation mittels einer kryptographischen Einwegfunktion aus jeweils einer ersten Validierungsinformation generiert wird;
- Speichern der mindestens einen ersten Authentisierungsinformation jeweils in einem ersten Datenelement des Datenstroms;
- Übermitteln des jeweiligen ersten Datenelements an mindestens einen Empfänger;
- Berechnen mindestens einer zweite Authentisierungsinformation, wobei die mindestens eine zweite Authentisierungsinformation mittels der kryptographischen Einwegfunktion aus jeweils einer zweiten Validierungsinformation generiert wird;
- Speichern der jeweiligen ersten Validierungsinformation in jeweils einem zweiten Datenelement des Datenstroms;
- Speichern der mindestens einen zweiten Authentisierungsinformation jeweils in dem zweiten Datenelement des Datenstroms;
- Speichern der jeweiligen zweite Validierungsinformation in jeweils einem dritten Datenelement des Datenstroms; und
- Übermitteln des jeweiligen zweiten Datenelements an den mindestens einen Empfänger.

Hierdurch lassen sich insbesondere die Validierungsinformationen und Authentisierungsinformationen miteinander verketten oder verschränken und es wird beispielsweise eine erhöhte Sicherheit des Verfahrens erreicht.

Unter einer "Validierungsinformation" kann im Zusammenhang mit der Patentanmeldung beispielsweise eine Zufallszahl, ein Einmalwert (Nonce) und/oder eine fortlaufend inkrementierte/dekrementierte Zahl verstanden werden. Alternativ und/oder zusätzlich kann die Validierungsinformation beispielsweise einen Senderidentifizierer und/oder einen Prüfwert und/oder weitere Informationen, beispielsweise aus einem Header eines Datenelements, umfassen oder davon abhängig gebildet werden, wobei der Prüfwert beispielsweise über den Inhalt des Datenelements berechnet wird. Eine Validierungsinformation ist damit insbesondere kein Schlüssel eines asymmetrischen kryptographischen Verfahrens. Die Zufallszahl und/oder die fortlaufend inkrementierte/dekrementierte Zahl kann insbesondere für jeweils ein Datenelement neu erzeugt werden.

Unter einem "Datenelement" kann im Zusammenhang mit der Patentanmeldung beispielsweise ein Datenpaket oder eine Nachricht verstanden werden. Das Datenpaket oder die Nachricht kann insbesondere mittels eines Broadcastnetzwerkprotokolls an einen oder mehrere Empfänger übermittelt werden. Die jeweiligen Datenelemente sind insbesondere voneinander verschiedene Datenelemente (voreinander getrennte Datenelemente), die vorzugsweise zeitlich versetzt voneinander übermittelt und/oder empfangen werden.

Unter einem "Datenstrom" kann im Zusammenhang mit der Patentanmeldung beispielsweise das Versenden von Informationen mittels mehrerer Datenelemente verstanden werden. Ein Datenstrom kann beispielsweise ein Videostream sein, der von einem Streamingserver an einen oder mehrere Streamingclients mittels des UDP Protokolls übermittelt wird. Die einzelnen UDP Pakete sind in diesem Fall insbesondere die Datenelemente des erfindungsgemäßen Verfahrens. Ein Datenstrom kann allgemein durch eine Folge von Datenelementen gegeben sein. Beispielsweise enthalten mehrere oder alle Datenelemente des Datenstroms dabei eine Authentisierungsinformation, die sich auf das jeweilige Datenelement bezieht, und eine Validierungsinformation, die einer Authentisierungsinformation eines zurückliegend übertragenen Datenelements zugeordnet ist und die zu deren Überprüfung verwendbar ist. Der erfindungsgemäße Schutz von Nachrichten kann insbesondere auf alle Datenelemente eines Datenstroms oder auf eine vorgegebene Teilmenge der Datenelemente des Datenstroms angewendet werden.

Unter einer "kryptographischen Einwegfunktion" kann im Zusammenhang mit dem vorliegenden Fall beispielsweise eine kryptographische Hashfunktion verstanden werden.

Unter einer "Prüfsumme" kann im Zusammenhang mit dem vorliegenden Fall beispielsweise eine kryptographische Prüfsumme verstanden werden. Die Prüfsumme kann beispielsweise mit einer zyklischen Redundanzprüfung (engl. cyclic redundancy check, CRC), einem Hash, einem kryptographischen Hash, einem Nachrichtenauthentifizierungscode (engl. Message Authentication Code, MAC) oder einer digitale Signatur des gebildet werden. Die Prüfsumme kann beispielsweise über einen Teil eines Datenelements, beispielsweise das erste Datenelement, oder über das gesamte Datenelement gebildet werden. Die Prüfsumme wird dann insbesondere dem Datenelement hinzugefügt, bevor das Datenelement beispielsweise durch den Sender übermittelt wird.

Mit dem Verfahren kann beispielsweise ein Empfänger verlässlich prüfen, dass eine empfangene Nachricht vom gleichen Sender stammt wie eine zurückliegend empfangene Nachricht. Das Verfahren ist beispielsweise für eine Kommunikation mit einer Vielzahl von Empfängern anwendbar. Es ist insbesondere kein spezieller Beginn einer Session erforderlich: Mehrere Empfänger können insbesondere an jeweils unterschiedlichen Positionen einer Folge von gesendeten Datenelementen aufspringen. Es ist also insbesondere keine empfängerspezifische Synchronisation erforderlich, und es ist nicht darauf beschränkt, sich nur zu bestimmten Zeitpunkten synchronisieren zu können. Das Verfahren benötigt insbesondere keinen kryptographischen Schlüssel auf Empfängerseite. So ist beispielsweise kein aufwendiges Key Management (Schlüsselverteilung, Schlüsselaktualisierung) erforderlich. Im Gegensatz beispielweise zur herkömmlichen digitalen Signatur werden insbesondere nur effizient durchführbare kryptographische Operationen verwendet.

Insbesondere der Zusammenhang zwischen einer Validierungsinformation und einer Authentisierungsinformation kann beispielsweise auf unterschiedlich Weise implementiert werden. Die jeweilige Validierungsinformation kann beispielsweise jeweils mindestens einer Authentisierungsinformation oder mehrerem Authentisierungsinformationen zugeordnet sein. Alternativ kann die jeweilige Validierungsinformation jeweils einer einzigen Authentisierungsinformation zugeordnet ist.

Vorzugsweise erfolgt die Übertragung des zweiten Datenelements, umfassend eine Validierungsinformation, in einem Zeitfenster bzw. zu einem Zeitpunkt, der abhängig von der Übertragung des ersten Datenelements, umfassend eine Authentisierungsinformation, bestimmt wird. Mit anderen Worten bedeutet dies insbesondere, dass beispielsweise ein Datenelement mit einer Validierungsinformation zeitlich nach dem Datenelement mit der zugehörigen Authentisierungsinformation gesendet wird.

Vorzugsweise akzeptiert ein Empfänger das erste Datenelement als gültig, wenn insbesondere das zweite Datenelement in einem Zeitfenster empfangen wird, das beispielsweise abhängig vom Empfangszeitpunkt des ersten Datenelements bestimmt wird. Weiterhin überprüft insbesondere der Empfänger die Gültigkeit der Authentisierungsinformation des ersten Datenelements beispielsweise unter Verwendung der Validierungsinformation des zweiten Datenelements.

Das Verfahren kann beispielsweise bei der Car-to-Car-Kommunikation im Bereich des autonomen Fahrens eingesetzt werden, damit Fahrzeuge (PKWs und/oder LKWs) beispielsweise Positionsinformationen für Kollisionserkennung und Kollisionsvermeidung austauschen. Ebenso kann das Verfahren beispielsweise für eine Publish-Subscribe-Kommunikation oder eine Steuerkommunikation verwendet werden, bei der insbesondere ein Sender eine Folge von Steuernachrichten und/oder Statusnachrichten und/oder Sensornachrichten an eine Vielzahl von Empfängern drahtlos oder leitungsgebunden überträgt. Die Übertragung ist vorzugsweise eine Multicast-Kommunikation oder eine Broadcast-Kommunikation.

Bei einer ersten Ausführungsform des Verfahrens wird jeweils eine weitere erste Authentisierungsinformation und eine weitere zweite Authentisierungsinformation berechnet, wobei die jeweils weitere erste Authentisierungsinformation mittels der kryptographischen Einwegfunktion aus jeweils einer weiteren ersten Validierungsinformation generiert wird, wobei die jeweils weitere zweite Authentisierungsinformation mittels der kryptographischen Einwegfunktion aus jeweils einer weiteren zweiten Validierungsinformation generiert wird, wobei die jeweils weitere erste Authentisierungsinformation jeweils in einem weiteren ersten Datenelement gespeichert wird und an den mindestens einen Empfänger übermittelt wird, wobei die jeweils weitere erste Validierungsinformation in einem weiteren zweiten Datenelement gespeichert wird, wobei die jeweils weitere zweite Authentisierungsinformation jeweils in dem weiteren zweiten Datenelement gespeichert wird und an den mindestens einen Empfänger übermittelt wird, und wobei die jeweils weitere zweite Validierungsinformation in einem weiteren dritten Datenelement gespeichert wird.

Mit dem Verfahren kann beispielsweise in den Datenstrom mehrmals, also in verschiedenen Datenelementen, die Authentisierungsinformation und/oder Validierungsinformation eingebracht werden, sodass ein Empfänger den Sender während einer Datenübertragung mehrfach authentisieren kann. Ein Datenelement kann insbesondere mehrere Authentisierungsinformationen und mehrere Validierungsinformationen enthalten. Die mehreren Validierungsinformationen eines Datenelements beziehen sich vorzugsweise auf eine Mehrzahl von Authentisierungsinformationen unterschiedlicher insbesondere zeitlich zurückliegend übertragener Datenelemente. Dabei kann insbesondere einer Validierungsinformation jeweils ein unterschiedliches Gültigkeitszeitfenster für den Empfangszeitpunkt der jeweils zurückliegend übertragenen Authentisierungsinformation oder des die Authentisierungsinformation umfassenden Datenelements zugeordnet sein.

Bei einer weiteren Ausführungsform des Verfahrens umfasst eines der Datenelemente mindestens zwei Authentisierungsinformationen, wobei für die mindestens zwei Authentisierungsinformationen jeweils verschiedene Datenelemente eine zugehörige Validierungsinformation umfassen.

Hierdurch lässt sich beispielsweise mit dem ersten Datenelement zusammen mit dem zweiten Datenelement der Sender authentisieren, insbesondere ist damit möglich, dass ein Datenelement beispielsweise mehrere Authentisierungsinformationen für jeweils mehrere verschiedene später übermittelte Datenelemente umfasst. Hierdurch lässt sich eine Zuverlässigkeit des Verfahrens weiter verbessern.

Bei einer weiteren Ausführungsform des Verfahrens werden weitere Authentisierungsinformationen entsprechend der mindestens einen ersten Authentisierungsinformation berechnet, wobei die weiteren Authentisierungsinformationen und jeweils weitere Validierungsinformationen jeweils im dritten Datenelement und/oder weiteren Datenelementen des Datenstroms gespeichert und übermittelt werden, wobei das Speichern und das Übermitteln der weiteren Authentisierungsinformationen und der jeweils weiteren Validierungsinformationen entsprechend dem Speichern und Übermitteln des ersten Datenelementes und des zweiten Datenelementes und/oder dem Speichern und Übermittelns des zweiten Datenelementes und des dritten Datenelementes erfolgt.

Hierdurch lässt sich beispielsweise in allen Datenelementen des Datenstroms und/oder einer vordefinierten Anzahl von Datenelementen des Datenstroms und/oder einer vordefinierten Anzahl von Datenelementen abhängig von einer Länge des Datenstroms und/oder einer vordefinierten Anzahl von Datenelementen abhängig von einer Übertragungsdauer des Datenstroms eine Validierungsinformation und/oder Authentisierungsinformation einfügen. Hierdurch lässt sich die Zuverlässigkeit und die Sicherheit des Verfahrens weiter verbessern.

Bei einer weiteren Ausführungsform des Verfahrens umfasst das erste Datenelement eine erste Prüfsumme über zumindest einen Teil des ersten Datenelements und das zweite Datenelement umfasst ein erstes Geheimnis für eine Prüfung der ersten Prüfsumme.

Hierdurch lässt sich beispielsweise eine Integrität des Inhalts des ersten Datenelementes prüfen. Es können beispielsweise weitere Prüfsummen jeweils über weitere Datenelemente des Datenstroms gebildet und diesen hinzugefügt werden. Es werden dann beispielswese weitere Geheimnisse zum Prüfen der jeweiligen Prüfsumme in danach übermittelte Datenelemente eingefügt. Das Verfahren kann beispielsweise auf einen Teil der Datenelemente des Datenstroms angewendet werden oder auf möglichst allen Datenelemente des Datenstroms angewendet werden.

In einer Variante weisen insbesondere zumindest einzelne Datenelemente zusätzlich eine herkömmliche, den Sender authentisierende kryptographische Prüfsumme auf. Dabei kann es sich beispielsweise um eine digitale Signatur oder einen kryptographischen Nachrichtenauthentisierungscode handeln. Hierdurch kann insbesondere ein Empfänger den Sender eines (selbstauthentisierenden) Datenstroms vorzugsweise manipulationsgeschützt identifizieren. Dabei müssen insbesondere nur einzelne Datenelemente eine herkömmliche, die Identität des Senders nachweisende kryptographische Prüfsumme aufweisen. Dennoch kann beispielsweise der gesamte Datenstrom, d.h. die Folge von Datenelementen, dem identifizierten Sender zugeordnet werden.

Die Folge von Datenelementen eines Datenstroms wird vorzugsweise über den gleichen Datenübertragungskanal übertragen. Ein Datenübertragungskanal kann beispielsweise eine Funkübertragungsstrecke, eine Datenübertragungsleitung, ein Datenkommunikationsnetzwerk oder ein Übertragungspfad eines Datenkommunikationsnetzwerks sein. Es ist beispielsweise aber ebenso möglich, dass Datenelemente eines Datenstroms über unterschiedliche Datenübertragungswege übertragen werden oder auf unterschiedliche Art codiert oder moduliert werden. Es ist beispielsweise auch denkbar, dass die Datenelemente mit unterschiedlichem Signalpegel oder Sendeleistung oder auf einer unterschiedlichen Übertragungsfrequenz übertragen werden.

Gemäß einem weiteren Aspekt betrifft die Erfindung ein Verfahren zum Authentisieren eines Senders eines Datenstroms durch einen Empfänger mit den Verfahrensschritten:
- Empfangen mindestens eines ersten Datenelementes des Datenstroms, wobei das mindestens eine erste Datenelement jeweils eine erste Authentisierungsinformation umfasst;
- Empfangen mindestens eines zweiten Datenelementes des Datenstroms, wobei das mindestens eine zweite Datenelement jeweils eine erste Validierungsinformation für die jeweilige erste Authentifizierungsinformation umfasst;
- Berechnen jeweils einer ersten lokalen Authentisierungsinformation, wobei die jeweilige eine erste lokale Authentisierungsinformation mittels einer kryptographischen Einwegfunktion aus der jeweiligen ersten Validierungsinformation generiert wird;
- Vergleichen der jeweils ersten lokalen Authentisierungsinformation mit der jeweiligen ersten Authentisierungsinformation, wobei der Sender authentisiert wird, wenn die jeweilige erste lokale Authentisierungsinformation und die jeweilige erste Authentisierungsinformation eine ausreichende Übereinstimmung aufweisen.

Mit dem Verfahren kann beispielsweise ein Empfänger verlässlich prüfen, dass eine empfangene Nachricht vom gleichen Sender stammt wie eine zurückliegend empfange Nachricht. Das Verfahren ist beispielsweise für eine Kommunikation mit einer Vielzahl von Empfängern anwendbar. Es ist insbesondere kein spezieller Beginn einer Session erforderlich: Mehrere Empfänger können insbesondere an jeweils unterschiedlichen Positionen einer Folge von gesendeten Datenelementen aufspringen. Es ist also insbesondere keine empfängerspezifische Synchronisation erforderlich, und es ist nicht darauf beschränkt, sich nur zu bestimmten Zeitpunkten synchronisieren zu können. Das Verfahren benötigt insbesondere keinen kryptographischen Schlüssel auf Empfängerseite. So ist beispielsweise kein aufwendiges Key Management (Schlüsselverteilung, Schlüsselaktualisierung) erforderlich. Im Gegensatz beispielweise zu herkömmlichen digitalen Signaturen werden insbesondere nur effizient durchführbare kryptographische Operationen verwendet.

Insbesondere der Zusammenhang zwischen einer Validierungsinformation und einer Authentisierungsinformation kann beispielsweise auf unterschiedliche Weise implementiert werden. Die jeweilige Validierungsinformation kann beispielsweise jeweils mindestens einer Authentisierungsinformation oder mehrerem Authentisierungsinformationen zugeordnet sein. Alternativ kann die jeweilige Validierungsinformation jeweils einer einzigen Authentisierungsinformation zugeordnet sein.

Dadurch, dass beispielsweise die Validierungsinformation eine Prüfsumme für das erste Datenelement enthalten kann, kann beispielsweise auch zusätzlich auf einfache Weise die Integrität der vorherigen Nachricht überprüft werden.

Der Empfänger akzeptiert insbesondere das erste Datenelement dann als gültig, wenn das zweite Datenelement in einem Zeitfenster empfangen wird, das abhängig vom Empfangszeitpunkt des ersten Datenelements bestimmt wird. Weiterhin überprüft der Empfänger beispielsweise die Gültigkeit der Authentisierungsinformation des ersten Datenelements unter Verwendung der Validierungsinformation des zweiten Datenelements.

Mit anderen Worten bedeutet dies insbesondere, dass beispielsweise ein Datenelement mit einer Validierungsinformation zeitlich nach dem Datenelement mit der zugehörigen Authentisierungsinformation empfangen wird.

Bei einer ersten Ausführungsform des Verfahrens umfasst das zweite Datenelement eine Vielzahl von ersten Validierungsinformationen, wobei jeweils ein weiteres erstes Datenelement jeweils eine weitere erste Authentisierungsinformation umfasst, wobei für die jeweilige weitere erste Authentisierungsinformation jeweils eine weitere erste lokale Authentisierungsinformation entsprechend dem Berechnen der jeweils ersten lokalen Authentisierungsinformation berechnet wird, wobei ein Vergleichen der jeweiligen weiteren ersten Authentisierungsinformation mit deren jeweiligen weiteren lokalen ersten Authentisierungsinformation entsprechend dem Vergleichen der jeweiligen ersten lokalen Authentisierungsinformation mit der jeweiligen ersten Authentisierungsinformation erfolgt.

Bei einer weiteren Ausführungsform des Verfahrens umfasst das mindestens eine zweite Datenelement jeweils eine zweite Authentisierungsinformation, wobei mindestens ein drittes Datenelement empfangen wird, wobei das mindestens eine dritte Datenelement jeweils eine zweite Validierungsinformation umfasst, wobei jeweils eine zweite lokale Authentisierungsinformation berechnet wird, wobei die jeweilige eine zweite lokale Authentisierungsinformation mittels der kryptographischen Einwegfunktion aus der jeweiligen zweiten Validierungsinformation generiert wird, wobei die jeweils eine zweite lokale Authentisierungsinformation mit der jeweiligen zweiten Authentisierungsinformation verglichen wird, wobei der Sender authentisiert wird, wenn die jeweilige zweite lokale Authentisierungsinformation und die jeweilige zweite Authentisierungsinformation eine ausreichende Übereinstimmung aufweisen.

Bei einer weiteren Ausführungsform des Verfahrens umfassen die Datenelemente mindestens zwei Authentisierungsinformationen, wobei für die mindestens zwei Authentisierungsinformationen jeweils verschiedene Datenelemente eine zugehörige Validierungsinformation umfassen, wobei für die jeweils eine zugehörige Validierungsinformation jeweils eine weitere lokale Authentisierungsinformation entsprechend dem Berechnen der jeweils ersten lokalen Authentisierungsinformation berechnet wird, wobei ein Vergleichen der mindestens zwei Authentisierungsinformationen mit den jeweiligen weiteren lokalen Authentisierungsinformationen entsprechend dem Vergleichen der jeweiligen ersten lokalen Authentisierungsinformation mit der jeweiligen ersten Authentisierungsinformation erfolgt.

Bei einer weiteren Ausführungsform des Verfahrens umfasst das mindestens eine dritte Datenelement und/oder weitere Datenelemente jeweils eine weitere Authentisierungsinformation, wobei für die jeweilige weitere Authentisierungsinformation jeweils eine zweite lokale Authentisierungsinformation entsprechend dem Berechnen der jeweils ersten lokalen Authentisierungsinformation berechnet wird, wobei ein Vergleichen der jeweiligen weiteren Authentisierungsinformation mit deren jeweiligen zweiten lokalen Authentisierungsinformation entsprechend dem Vergleichen der jeweiligen ersten lokalen Authentisierungsinformation mit der jeweiligen ersten Authentisierungsinformation erfolgt.

Bei einer weiteren Ausführungsform des Verfahrens umfasst das erste Datenelement eine erste Prüfsumme über zumindest einen Teil des ersten Datenelements, wobei das zweite Datenelement ein erstes Geheimnis umfasst und wobei eine Integrität des zumindest einen Teils des ersten Datenelements anhand der ersten Prüfsumme und dem ersten Geheimnis geprüft wird.

Gemäß einem weiteren Aspekt betrifft die Erfindung eine Erzeugungsvorrichtung zum Erzeugen eines Datenstroms, dessen Sender authentisierbar ist, aufweisend:
- ein erstes Berechnungsmodul zum Berechnen mindestens einer ersten Authentisierungsinformation, wobei die mindestens eine erste Authentisierungsinformation mittels einer kryptographischen Einwegfunktion aus jeweils einer ersten Validierungsinformation generiert wird;
- ein erstes Speichermodul zum Speichern der mindestens einen ersten Authentisierungsinformation jeweils in einem ersten Datenelement des Datenstroms;
- ein erstes Übermittlungsmodul zum Übermitteln des jeweiligen ersten Datenelements an mindestens einen Empfänger;
- ein zweites Speichermodul zum Speichern der jeweiligen ersten Validierungsinformation in jeweils einem zweiten Datenelement des Datenstroms; und
- ein zweites Übermittlungsmodul zum Übermitteln des jeweiligen zweiten Datenelements an den mindestens einen Empfänger.

Das erste Speichermodul und das zweite Speichermodul können beispielsweise auch als ein integrales Speichermodul ausgebildet sein. Ebenfalls können das erste Übermittlungsmodul und das zweite Übermittlungsmodul als ein integrales Übermittlungsmodul ausgebildet sein.

Gemäß einem weiteren Aspekt betrifft die Erfindung eine Authentisierungsvorrichtung zum Authentisieren eines Senders eines Datenstroms durch einen Empfänger aufweisend:
- ein erstes Empfangsmodul zum Empfangen mindestens eines ersten Datenelementes des Datenstroms, wobei das mindestens eine erste Datenelement jeweils eine erste Authentisierungsinformation umfasst;
- ein zweites Empfangsmodul zum Empfangen mindestens eines zweiten Datenelementes des Datenstroms, wobei das mindestens eine zweite Datenelement jeweils eine erste Validierungsinformation für die jeweilige erste Authentifizierungsinformation umfasst;
- ein zweites Berechnungsmodul zum Berechnen jeweils einer ersten lokalen Authentisierungsinformation, wobei die jeweilige eine erste lokale Authentisierungsinformation mittels einer kryptographischen Einwegfunktion aus der jeweiligen ersten Validierungsinformation generiert wird;
- ein erstes Vergleichsmodul zum Vergleichen der jeweils ersten lokalen Authentisierungsinformation mit der jeweiligen ersten Authentisierungsinformation, wobei der Sender authentisiert wird, wenn die jeweilige erste lokale Authentisierungsinformation und die jeweilige erste Authentisierungsinformation eine ausreichende Übereinstimmung aufweisen.

Das erste Empfangsmodul und das zweite Empfangsmodul können beispielsweise auch als ein integrales Empfangsmodul ausgebildet sein.

Gemäß einem weiteren Aspekt betrifft die Erfindung ein System umfassend:
- einen ersten Kommunikationspartner, der eine erfindungsgemäße Erzeugungsvorrichtung aufweist;
- mindestens einen zweiten Kommunikationspartner, der eine erfindungsgemäße Authentisierungsvorrichtung aufweist, wobei der erste Kommunikationspartner und der zweite Kommunikationspartner über ein Kommunikationsnetzwerk kommunikativ miteinander in Verbindung stehen.

Des Weiteren wird ein Computerprogrammprodukt mit Programmbefehlen zur Durchführung des genannten erfindungsgemäßen Verfahrens beansprucht.

Zusätzlich wird eine Variante des Computerprogrammproduktes mit Programmbefehlen zur Konfiguration eines Erstellungsgeräts, beispielsweise ein 3D-Drucker oder ein zur Erstellung von Prozessoren und/oder Geräten und/oder Vorrichtungen geeignetes Gerät, beansprucht, wobei das Erstellungsgerät mit den Programmbefehlen derart konfiguriert wird, dass die genannten erfindungsgemäßen Vorrichtungen erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein Cloud-basiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses die erfindungsgemäßen Vorrichtungen erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ablaufdiagramm eines ersten Ausführungsbeispiels eines erfindungsgemäßen Verfahrens aus Sicht des Senders;
- Fig. 2: ein Ablaufdiagramm des ersten Ausführungsbeispiels eines erfindungsgemäßen Verfahrensaus Sicht des Empfängers;
- Fig. 3: Datenelemente des ersten Ausführungsbeispiels eines erfindungsgemäßen Verfahrens;
- Fig. 4: ein zweites Ausführungsbeispiel eines erfindungsgemäßen Verfahrens;
- Fig. 5: ein drittes Ausführungsbeispiel eines erfindungsgemäßen Verfahrens;
- Fig. 6: ein viertes Ausführungsbeispiel eines erfindungsgemäßen Verfahrens;
- Fig. 7: eine Erzeugungsvorrichtung eines fünftes Ausführungsbeispiels, die ein erfindungsgemäßes Verfahren implementiert;
- Fig. 8: eine Authentisierungsvorrichtung eines sechsten Ausführungsbeispiels, die ein erfindungsgemäßes Verfahren implementiert;

In den Figuren sind funktionsgleiche Elemente mit denselben Bezugszeichen versehen, sofern nichts anderes angegeben ist.

Die nachfolgenden Ausführungsbeispiele werden vorzugsweise mittels eines Prozessors und/oder einem Speichermodul implementiert, sofern nichts anderes angegeben ist.

Im Einzelnen können die Komponenten und Vorrichtungen der Erfindung, sofern nicht anders angegeben oder bereits erwähnt, jeweils einen eigenen Prozessor und/oder Speichereinrichtung aufweisen, um das Verfahren zu implementieren und/oder auszuführen. Die Komponenten können auch weitere typtische Einrichtungen aufweisen, die einem Fachmann bekannt sind. Beispielsweise Eingabegeräte und/oder Anzeigegeräte.

Die nachfolgenden Ausführungsbeispiele beziehen sich insbesondere auf eine Kommunikation eines ersten Kommunikationspartners, beispielsweise einem Sender, der die Datenelemente an mindestens einen zweiten Kommunikationspartner, beispielsweise einen Client, mittels eines Kommunikationsnetzwerkes, beispielsweise ein Ethernetnetzwerk, übermittelt.

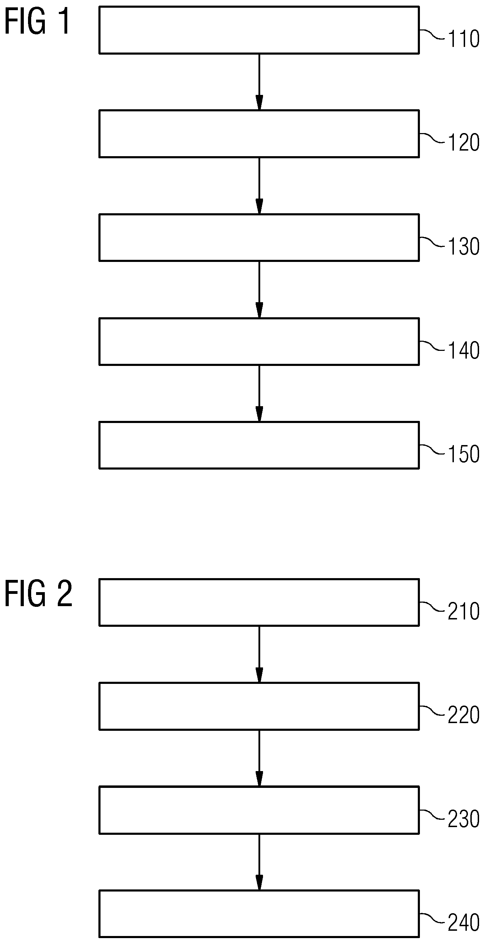

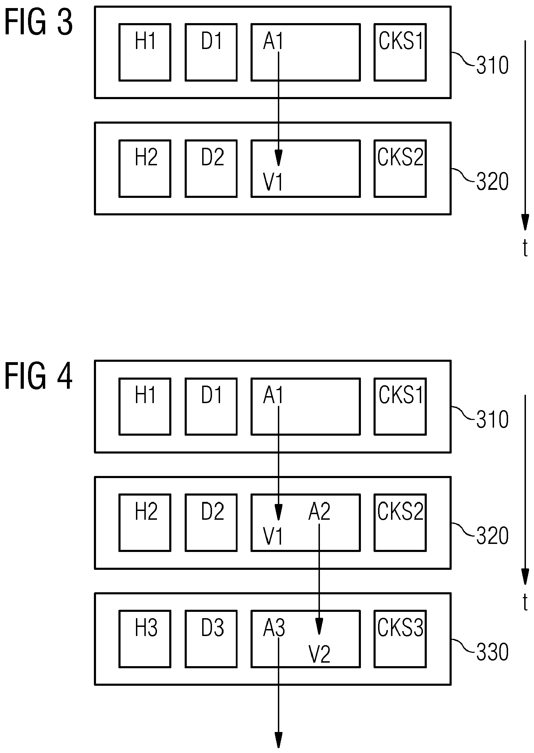

Die Fig. 1 zeigt ein Ablaufdiagramm eines ersten Ausführungsbeispiels eines erfindungsgemäßen Verfahrens aus Sicht des Senders. Die Fig. 2 zeigt ein Ablaufdiagramm des ersten Ausführungsbeispiels eines erfindungsgemäßen Verfahrens aus Sicht des Empfängers. Die Fig. 3 zeigt beispielshaft zwei Datenelemente des ersten Ausführungsbeispiels.

Im Einzelnen zeigt Fig. 1 ein Verfahren zum Erzeugen eines Datenstroms durch einen Sender.

Das Verfahren umfasst einen ersten Verfahrensschritt zum Berechnen 110 einer ersten Authentisierungsinformation, wobei die erste Authentisierungsinformation mittels einer kryptographischen Einwegfunktion und einer ersten Validierungsinformation generiert wird;
Das Verfahren umfasst einen zweiten Verfahrensschritt zum Speichern 120 der ersten Authentisierungsinformation in einem ersten Datenelement des Datenstroms.

Das Verfahren umfasst einen dritten Verfahrensschritt zum Übermitteln 130 des ersten Datenelements an mindestens einen Empfänger.

Das Verfahren umfasst einen vierten Verfahrensschritt zum Speichern 140 der ersten Validierungsinformation in einem zweiten Datenelement des Datenstroms.

Das Verfahren umfasst einen fünften Verfahrensschritt zum Übermitteln 150 des zweiten Datenelements an den mindestens einen Empfänger.

Die Datenelemente werden beispielsweise nacheinander verschickt, also zuerst das erste Datenelement, dann das zweite Datenelement usw.

Im Einzelnen zeigt Fig. 2 ein Verfahren zum Authentisieren eines Senders eines Datenstroms durch einen Empfänger.

Das Verfahren umfasst einen sechsten Verfahrensschritt zum Empfangen 210 mindestens eines ersten Datenelementes des Datenstroms, wobei das mindestens eine erste Datenelement jeweils eine erste Authentisierungsinformation umfasst.

Das Verfahren umfasst einen siebten Verfahrensschritt zum Empfangen 220 mindestens eines zweiten Datenelementes des Datenstroms, wobei das mindestens eine zweite Datenelement jeweils eine erste Validierungsinformation für die jeweilige erste Authentifizierungsinformation umfasst.

Das Verfahren umfasst einen achten Verfahrensschritt zum Berechnen 230 jeweils einer ersten lokalen Authentisierungsinformation, wobei die jeweilige eine erste lokale Authentisierungsinformation mittels einer kryptographischen Einwegfunktion aus der jeweiligen ersten Validierungsinformation generiert wird.

Das Verfahren umfasst einen neunten Verfahrensschritt zum Vergleichen 240 der jeweils ersten lokalen Authentisierungsinformation mit der jeweiligen ersten Authentisierungsinformation, wobei der Sender authentisiert wird, wenn die jeweilige erste lokale Authentisierungsinformation und die jeweilige erste Authentisierungsinformation eine ausreichende Übereinstimmung aufweisen.

Das in den Fig. 1 - 3 dargestellte Verfahren wird vorzugsweise rechnergestützt implementiert und verwendet insbesondere Netzwerkschnittstellen für das Übermitteln und Empfangen der Datenelemente.

Im Einzelnen zeigt die Fig. 3 beispielhaft das erste Datenelement 310 und das zweite Datenelement 320. Die Fig. 3 zeigt zusätzlich einen Zeitstrahl t der illustriert, dass die Datenelemente 310, 320 nacheinander, insbesondere zeitlich versetzt, von dem Sender zum Empfänger übermittelt werden. Der Sender kann diese Datenelemente 310, 320 an mehrere Empfänger, beispielsweise in einer Broadcastkommunikation, versenden. Zusätzlich kann das Verfahren auf weitere Datenelemente des Datenstroms angewendet werden.

Im Einzelnen umfasst das erste Datenelement 310 einen ersten Header H1, erste Nutzerdaten D1, die erste Authentisierungsinformation A1 und eine erste Prüfsumme CKS1, wobei die Prüfsumme über den ersten Header H1, die ersten Nutzerdaten D1 und die erste Authentisierungsinformation A1 gebildet sein kann oder nur über den ersten Header H1 und die ersten Nutzerdaten D1.

Der erste Header H1 und die anderen später genannten Header können eine Kennung des Senders (Sender ID) und/oder einen Identifizierer eines Datenelements (Datenelement-ID z.B. Zähler, Zeitwert, Nonce, Zufallswert) umfassen, wobei der Identifizierer wiederum Teil der Validierungsinformation sein kann. Die Validierungsinformation kann sich somit insbesondere auf das ganze Datenelement oder einen Teil des Datenelements beziehen. Dies können beispielsweise Header, Daten, Identifizierer eines Datenelements bei einer kryptographisch generierten Datenelement-ID, eine Prüfsumme oder eine Kombination aus diesen Informationen sein.

Das zweite Datenelement 320 umfasst einen zweiten Header H2, zweite Nutzerdaten D2, die erste Validierungsinformation V1 und eine zweite Prüfsumme CKS2, wobei die zweite Prüfsumme CKS2 über den zweiten Header H2, die zweiten Nutzerdaten D2 und die erste Validierungsinformation V1 gebildet sein kann oder nur über den zweiten Header H2 und die zweiten Nutzerdaten D2. Mit anderen Worten können die Prüfsummen über das gesamte Datenelement gebildet werden oder über ausgewählte Datenfelder des Datenelements.

Wie im erfindungsgemäßen Verfahren erläutert, wird zunächst das erste Datenelement 310 übermittelt und danach das zweite Datenelement 320.

Mit dem erfindungsgemäßen Verfahren ist es somit insbesondere möglich den Sender eines Datenstroms (Folge von Datenelementen) aus einer Folge von Datenelementen (Block, Message, Paket) als den gleichen Sender zu identifizieren/authentisieren, der die vorhergehenden Blöcke gesendet hat.

Das Verfahren kann von mehreren Empfängern durchgeführt werden, sodass das Verfahren insbesondere für eine Multicast/Broadcast-Kommunikation und eine Publish-Subscribe-Kommunikation geeignet ist.

Mit anderen Worten besteht die Grundidee daraus, dass das erste Datenelement des Senders die erste Authentisierungsinformation umfasst. Die Authentisierungsinformation kann beispielsweise mit C = H(V) berechnet werden, wobei V eine Validierungsinformation ist, die beispielsweise einen Zufallswert umfasst, und H ist eine kryptographische Einwegfunktion, z.B. SHA256, SHA3, HMAC-SHA256.

Die Authentisierungsinformation kann nur durch denjenigen validiert werden, der die Validierungsinformation kennt. In einem nachfolgenden Datenelement, beispielsweise dem zweiten Datenelement, wird die Validierungsinformation durch den Sender bereitgestellt. Dadurch sind das erste Datenelement mit der Authentisierungsinformation und dem zweiten Datenelement mit der Validierungsinformation dem gleichen Sender zuordenbar, auch wenn der Sender nicht auf herkömmliche Weise authentisiert ist.

Der Sender sendet also einen Datenstrom aus einer Folge von solchen Datenelementen (Block, Paket, Message), die jeweils eine Authentisierungsinformation und eine Validierungsinformation für eine zurückliegende, also in einem vorher (zeitlich vorher) gesendeten Datenelement, Authentisierungsinformation enthalten.

Der Empfänger prüft dann, ob die Validierungsinformation zu der zugeordneten zurückliegenden, zwischengespeicherten Authentisierungsinformation, beispielsweise die Authentisierungsinformation des ersten Datenelements, passt.

Mögliche Anwendungsgebiete für das Verfahren sind:
- Satellitenkommunikation (z.B. Open Service Authentication eines GPS oder Galileo Satellitennavigationsdienstes)
- Publish-Subscribe-Kommunikation (z.B. MQTT, XMPP, AMQP)
- Steuerungskommunikation (Multicast/Broadcast)
- Sensornetzwerke, Internet of Things
- Continuous device authentication (der Sender ändert sich nicht während einer Übertragung eines Datenstroms)

In einer Variante wird für jedes Berechnen oder Generieren einer Authentisierungsinformation jeweils zumindest ein Wert der Validierungsinformation neu berechnet, beispielsweise eine neue Zufallszahl generiert.

In einer weiteren Variante werden Validierungsinformationen in einem einzigen zweiten Datenelement für mehrere erste Datenelemente mit jeweils einer ersten Authentisierungsinformation erzeugt und übermittelt. Damit kann der Empfänger den Sender der mehreren ersten Datenelemente mit dem zweiten Datenelement authentisieren.

Die Fig. 4 zeigt ein zweites Ausführungsbeispiel eines erfindungsgemäßen Verfahrens. Es stellt eine Erweiterung des Verfahrens dar, das bereits in den Fig. 1 - 3 dargestellt wurde. Entsprechend gelten die Definitionen aus den Fig. 1 - 3 auch für die Fig. 4.

Im Einzelnen wird in diesem Ausführungsbeispiel mindestens eine zweite Authentisierungsinformation A2 berechnet, wobei die mindestens eine zweite Authentisierungsinformation A2 mittels der kryptographischen Einwegfunktion aus jeweils einer zweiten Validierungsinformation V2 generiert wird. Mit anderen Worten wird eine zweite Authentisierungsinformation analog zur ersten Authentisierungsinformation generiert.

Die mindestens eine zweite Authentisierungsinformation A2 wird jeweils in dem zweiten Datenelement 320 des Datenstroms gespeichert und an den mindestens einen Empfänger übermittelt. Die jeweilige zweite Validierungsinformation V2 wird dann in jeweils einem dritten Datenelement 330 des Datenstroms gespeichert und an den mindestens einen Empfänger übermittelt. Das dritte Datenpaket umfasst dabei beispielsweise wiederum eine dritte Authentisierungsinformation A3, für die in einem nachfolgenden Datenelement eine Validierungsinformation übermittelt wird, einen dritten Header, dritte Nutzerdaten und eine dritte Prüfsumme, die entsprechend der anderen Prüfsummen berechnet wird. Die Authentisierungsinformation wird analog zur ersten Authentisierungsinformation berechnet.

Empfängerseitig umfasst das mindestens eine zweite Datenelement 320 jeweils die zweite Authentisierungsinformation A2. Vom Empfänger wird dann mindestens das dritte Datenelement 330 empfangen, wobei das mindestens eine dritte Datenelement 330 jeweils die zweite Validierungsinformation V2 umfasst.

Der Empfänger berechnet dann jeweils eine zweite lokale Authentisierungsinformation, wobei die jeweilige eine zweite lokale Authentisierungsinformation mittels der kryptographischen Einwegfunktion aus der jeweiligen zweiten Validierungsinformation V2 generiert wird.

Der Empfänger vergleicht dann die jeweils eine zweite lokale Authentisierungsinformation mit der jeweiligen zweiten Authentisierungsinformation A2, wobei der Sender authentisiert wird, wenn die jeweilige zweite lokale Authentisierungsinformation und die jeweilige zweite Authentisierungsinformation A2 eine ausreichende Übereinstimmung aufweisen.

Dieses Verketten oder Verschränken von Nachrichten mittels den Authentisierungsinformationen A1, A2 und Validierungsinformationen V1, V2 kann für weitere Datenelemente des Datenstroms fortgesetzt werden, sodass insbesondere ein Fehlen eines Datenelementes oder ein Einfügen eines Datenelementes in den Datenstrom durch einen unberechtigten Sender durch den Empfänger erkannt werden kann.

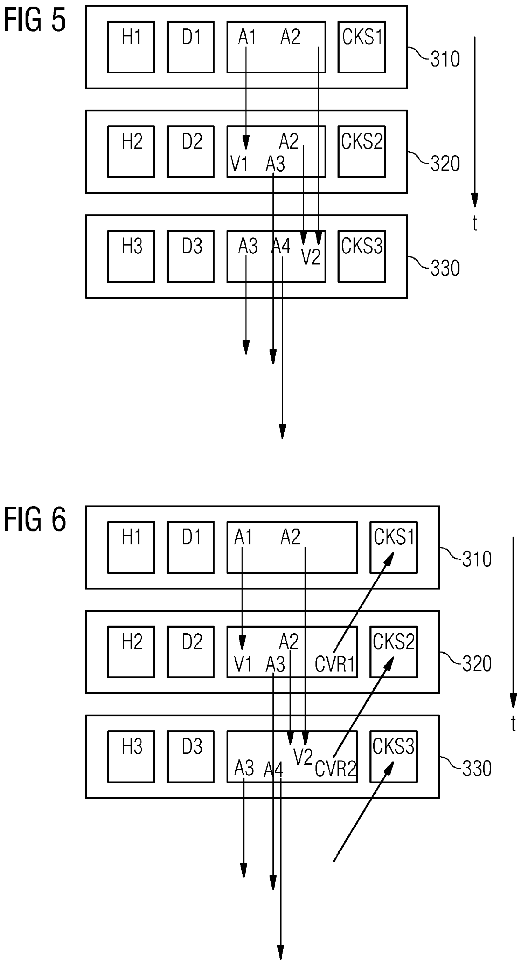

Die Fig. 5 zeigt ein drittes Ausführungsbeispiel eines erfindungsgemäßen Verfahrens. Es stellt eine Erweiterung des Verfahrens dar, das bereits in den Fig. 1 - 4 dargestellt wurde. Entsprechend gelten die Definitionen aus den Fig. 1 - 4 auch für die Fig. 5, sofern nichts anderes angegeben ist.

In diesem Ausführungsbeispiel umfasst eines der Datenelemente 310, 320, 330 mindestens zwei Authentisierungsinformationen, wobei für die mindestens zwei Authentisierungsinformationen jeweils verschiedene Datenelemente eine zugehörige Validierungsinformation umfassen. Das bedeutet in diesem Ausführungsbeispiel, dass das erste Datenelement 210 eine erste Authentisierungsinformation A1 und eine zweite Authentisierungsinformation A2 umfasst.

Das zweite Datenelement 320 umfasst dann die zweite Authentisierungsinformation A2, eine dritte Authentisierungsinformation A3 und die erste Validierungsinformation V1.

Das dritte Datenelement 330 umfasst dann die dritte Authentisierungsinformation A3, eine vierte Authentisierungsinformation A4 und die der zweiten Authentisierungsinformation A2 zugeordnete Validierungsinformation V2.

Der Empfänger empfängt die Datenelemente, die mindestens zwei Authentisierungsinformationen umfassen. Wenn ein Datenelement mit den mindestens zwei Authentisierungsinformationen, beispielsweise die erste Authentisierungsinformation A1 und die zweite Authentisierungsinformation A2, empfangen wurde, enthalten ein darauffolgendes Datenelement, beispielsweise das erste darauffolgende Datenelement, die erste Validierungsinformation V1 und ein weiteres darauffolgendes Datenelement, beispielsweise das zweite darauffolgende Datenelement, die zweite Validierungsinformation.

Der Empfänger berechnet dann analog zum Berechnen der jeweils ersten lokalen Authentisierungsinformation des ersten Ausführungsbeispiels für die jeweils zugehörige Validierungsinformation V1, V2 jeweils eine weitere lokale Authentisierungsinformation.

Der Empfänger vergleicht dann die mindestens zwei Authentisierungsinformationen A1, A2 mit den jeweiligen weiteren lokalen Authentisierungsinformationen entsprechend dem Vergleichen der jeweiligen ersten lokalen Authentisierungsinformation aus dem ersten Ausführungsbeispiel mit der jeweiligen ersten Authentisierungsinformation.

Die Authentisierungsinformationen werden analog zur Authentisierungsinformation in den Fig. 1-3 berechnet. Der Unterschied dieses Ausführungsbeispiels hinsichtlich des ersten Ausführungsbeispiels besteht darin, dass ein Datenelement zwei oder mehr Authentisierungsinformationen umfasst, wobei die nachfolgenden Datenelemente jeweils eine zugehörige Validierungsinformation zum Authentisieren des Senders umfassen.

Im Ausführungsbeispiel umfasst ein Datenelement jeweils zwei Authentisierungsinformationen. Wird nun dieses Datenelement mit den zwei Authentisierungsinformationen gesendet, so umfasst das erste nachfolgende Datenelement für die erste Authentisierungsinformation die zugehörige erste Validierungsinformation. Das zweite nachfolgende Datenelement umfasst dann für die zweite Authentisierungsinformation die zugehörige zweite Validierungsinformation.

Mit anderen Worten zeigt Fig. 5 insbesondere ein Ausführungsbeispiel bei dem ein Datenelement eine Authentisierungsinformation für ein künftiges Datenelement (vollständiges Datenelement oder einen Teil eines Datenelements) umfasst. Das künftige Datenelement wird von einem Sender erst zu einem späteren Zeitpunkt bereitgestellt (erzeugt und/oder übermittelt) .

Auf das Ausführungsbeispiel bezogen, kann die erste Authentisierungsinformation A1 wie folgt berechnet werden:
A1 := SHA256(erster Header H1 | erste Nutzdaten),
wobei SHA256 (sicherer Hash-Algorithmus) eine Einwegfunktion, insbesondere eine kryptographische Hashfunktion, ist.

Die Prüfsummen, also die erste Prüfsumme CKS1, die zweite Prüfsumme CKS2 und die dritte Prüfsumme CKS3, sind optional (kryptographische Prüfsumme).

Die Prüfsumme kann beispielsweise mit einer zyklischen Redundanzprüfung (engl. cyclic redundancy check, CRC), einem Hash, einem Nachrichtenauthentifizierungscode (engl. Message Authentication Code, MAC) oder einer digitalen Signatur des Datenelements gebildet werden.

Die Prüfsummen, soweit sie vorhanden sind, werden vorzugsweise über den gesamten Inhalt des jeweiligen Datenelements berechnet.

Die Fig. 6 zeigt ein viertes Ausführungsbeispiel eines erfindungsgemäßen Verfahrens. Im Einzelnen wird im Ausführungsbeispiel gezeigt, wie das erfindungsgemäße Verfahren und die dazugehörigen Ausführungsbeispiele mit einem Prüfsummenverfahren verknüpft werden können.

Eine Prüfsumme als Prüfsumme über ein Datenelement kann in einem künftigen/nachfolgenden Datenelement aufgelöst werden. Hierbei ist insbesondere kein Schlüssel für eine herkömmliche kryptographische Prüfsumme erforderlich.

Es wird also beispielsweise in dem ersten Datenelement 310 zusätzlich eine erste Prüfsumme CSK1 durch den Sender gespeichert, bevor es übermittelt wird.

Es wird dann in einem nachfolgenden Datenelement, beispielsweise dem zweiten Datenelement 320, ein erstes Geheimnis CVR1 offenbart, mit dem die erste Prüfsumme CSK1 nachträglich durch den Empfänger überprüft werden kann. Das Verfahren lässt sich für die weiteren Datenelemente wiederholen. Das Verfahren erlaubt insbesondere eine Integritätsprüfung der einzelnen Datenelemente.

Das Verfahren ähnelt dabei dem Tesla Protokoll [1], allerdings müssen die geheimen Schlüssel nicht über eine Hash-Chain verkettet sein und es muss auch kein Ankerwert über einen separaten Schlüsselverteilmechanismus verteilt werden.

Im Einzelnen können mit den Verfahren folgende Sicherheitsziele erreicht werden:
- Überprüfbarkeit der Nachrichtenintegrität (Daten sind nicht manipuliert) durch die jeweiligen Prüfsummen CSK1, CSK2, CSK3
- Überprüfbarkeit der Senderauthentizität durch die Authentisierungsinformation und die Validierungsinformation

Da nur Einwegfunktionen, insbesondere Hashfunktionen, verwendet werden und kein Verschlüsselungsalgorithmus ist das Verfahren auch vorteilhaft einsetzbar, wenn Nutzungsbeschränkungen oder Exportbeschränkungen bezüglich Verschlüsselungstechnologie bestehen.

Das Verfahren ist sehr performant, da wenig Zeit zur Berechnung der Authentisierungsinformation oder dem Prüfwert notwendig ist im Vergleich zu Verschlüsselungsalgorithmen, da insbesondere keine asymmetrische kryptographische Operation (z.B. digitale Signatur) für jedes Datenelement ausgeführt werden.

In einer Variante können manche Datenelemente zusätzlich digital signiert sein. Dadurch kann dann beispielsweise in einer Folge von Datenelementen ein Empfänger auch (evtl. verzögert) den Sender auf konventionelle Weise authentisieren. Wenn der Sender nun vorzugsweise einmalig konventionell authentisiert wurde, kann durch das erfindungsgemäße Verfahren durch den Empfänger überprüft werden, dass die weiteren Datenelemente ebenfalls vom Sender stammen ohne die aufwendige konventionelle Authentisierung insbesondere für jedes Datenelement zu verwenden.

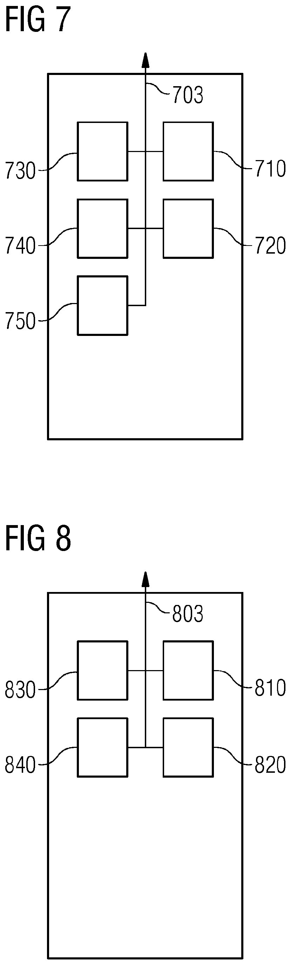

Die Fig. 7 zeigt eine Erzeugungsvorrichtung eines fünften Ausführungsbeispiels, die ein erfindungsgemäßes Verfahren implementiert.

Im Einzelnen zeigt Fig. 7 eine Erzeugungsvorrichtung zum Erzeugen eines Datenstroms, dessen Sender authentisierbar ist.

Die Erzeugungsvorrichtung weist ein erstes Berechnungsmodul 710, ein erstes Speichermodul 720, ein erstes Übermittlungsmodul 730, ein zweites Speichermodul 740 und ein zweites Übermittlungsmodul 750, die über einen ersten Bus 703 kommunikativ miteinander verbunden sind. Die Erzeugungsvorrichtung kann zusätzlich noch eine weitere Speichervorrichtung und/oder einen Prozessor aufweisen, der ebenfalls über den Bus 703 mit den Modulen verbunden ist. Bei der Erzeugungsvorrichtung kann es sich beispielsweise um einen Sender, insbesondere in Form eines Servers, handeln oder die Erzeugungsvorrichtung kann eine Komponente des Servers sein. Der Server umfasst beispielsweise zusätzlich ein Anzeigegerät in Form eines Monitors und/oder Eingabegeräte in Form einer Computermaus und/oder einer Tastatur.

Im Einzelnen ist das erste Berechnungsmodul 710 zum Berechnen mindestens einer ersten Authentisierungsinformation ausgelegt, wobei die mindestens eine erste Authentisierungsinformation mittels einer kryptographischen Einwegfunktion aus jeweils einer ersten Validierungsinformation generiert wird.

Das erste Speichermodul 720 speichert die mindestens eine erste Authentisierungsinformation jeweils in einem ersten Datenelement des Datenstroms.

Das erste Übermittlungsmodul 730 übermittelt das jeweilige erste Datenelement an mindestens einen Empfänger.

Das zweite Speichermodul 740 speichert die jeweilige erste Validierungsinformation in jeweils einem zweiten Datenelement des Datenstroms.

Das zweite Übermittlungsmodul 750 übermittelt das jeweilige zweite Datenelement an den mindestens einen Empfänger.

Die Fig. 8 zeigt eine Authentisierungsvorrichtung eines sechsten Ausführungsbeispiels, die ein erfindungsgemäßes Verfahren implementiert.

Im Einzelnen zeigt Fig. 8 eine Authentisierungsvorrichtung zum Authentisieren eines Senders eines Datenstroms durch einen Empfänger. Bei dem Sender kann es sich beispielsweise um einen Sender handeln, der die Erzeugungsvorrichtung aus Fig. 7 umfasst.

Die Authentisierungsvorrichtung umfasst ein erstes Empfangsmodul 810, ein zweites Empfangsmodul 820, ein zweites Berechnungsmodul 830 und ein erstes Vergleichsmodul 840, die über einen zweiten Bus 803 miteinander kommunikativ in Verbindung stehen. Die Authentisierungsvorrichtung kann zusätzlich noch eine weitere Speichervorrichtung und/oder einen Prozessor aufweisen, der ebenfalls über den Bus 703 mit den Modulen verbunden ist. Bei der Authentisierungsvorrichtung kann es sich beispielsweise um einen Sender, insbesondere in Form eines Clients, handeln oder die Authentisierungsvorrichtung ist eine Komponente des Senders. Der Client umfasst beispielsweise zusätzlich ein Anzeigegerät in Form eines Monitors und/oder Eingabegeräte in Form einer Computermaus und/oder einer Tastatur.

Im Einzelnen ist das erste Empfangsmodul 810 zum Empfangen mindestens eines ersten Datenelementes des Datenstroms ausgelegt, wobei das mindestens eine erste Datenelement jeweils eine erste Authentisierungsinformation umfasst.

Das zweite Empfangsmodul 820 empfängt mindestens ein zweites Datenelement des Datenstroms, wobei das mindestens eine zweite Datenelement jeweils eine erste Validierungsinformation für die jeweilige erste Authentifizierungsinformation umfasst.
Das zweite Berechnungsmodul 830 berechnet jeweils eine erste lokale Authentisierungsinformation, wobei die jeweilige eine erste lokale Authentisierungsinformation mittels einer kryptographischen Einwegfunktion aus der jeweiligen ersten Validierungsinformation generiert wird.

Das erste Vergleichsmodul 840 vergleicht die jeweils erste lokale Authentisierungsinformation mit der jeweiligen ersten Authentisierungsinformation, wobei der Sender authentisiert wird, wenn die jeweilige erste lokale Authentisierungsinformation und die jeweilige erste Authentisierungsinformation eine ausreichende Übereinstimmung aufweisen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

### Literaturverzeichnis

[1] Adrian Perrig, Ran Canetti, J. D. Tygar, Dawn Song, "The TESLA Broadcast Authentication Protocol", In CryptoBytes, 5:2, Summer/Fall 2002, pp. 2-13

## Patentansprüche

1. Verfahren zum Erzeugen eines Datenstroms, dessen Sender authentisierbar ist, mit den Verfahrensschritten:
- Berechnen (110) mindestens einer ersten Authentisierungsinformation, wobei die mindestens eine erste Authentisierungsinformation (A1) mittels einer kryptographischen Einwegfunktion aus jeweils einer ersten Validierungsinformation (V1) generiert wird;
- Speichern (120) der mindestens einen ersten Authentisierungsinformation (A1) jeweils in einem ersten Datenelement (310) des Datenstroms;
- Übermitteln (130) des jeweiligen ersten Datenelements (310) an mindestens einen Empfänger;
- Berechnen mindestens einer zweite Authentisierungsinformation (A2), wobei die mindestens eine zweite Authentisierungsinformation (A2) mittels der kryptographischen Einwegfunktion aus jeweils einer zweiten Validierungsinformation (V2) generiert wird; - Speichern (140) der jeweiligen ersten Validierungsinformation (V1) in jeweils einem zweiten Datenelement (320) des Datenstroms;
- Speichern der mindestens einen zweiten Authentisierungsinformation (A2) jeweils in dem zweiten Datenelement (320) des Datenstroms;
- Speichern der jeweiligen zweite Validierungsinformation (V2) in jeweils einem dritten Datenelement (330) des Datenstroms; und
- Übermitteln (150) des jeweiligen zweiten Datenelements (320) an den mindestens einen Empfänger.

2. Verfahren nach Anspruch 1, wobei
- jeweils eine weitere erste Authentisierungsinformation und eine weitere zweite Authentisierungsinformation berechnet wird,
- die jeweils weitere erste Authentisierungsinformation mittels der kryptographischen Einwegfunktion aus jeweils einer weiteren ersten Validierungsinformation generiert wird,
- die jeweils weitere zweite Authentisierungsinformation mittels der kryptographischen Einwegfunktion aus jeweils einer weiteren zweiten Validierungsinformation generiert wird,
- die jeweils weitere erste Authentisierungsinformation jeweils in einem weiteren ersten Datenelement gespeichert wird und an den mindestens einen Empfänger übermittelt wird,
- die jeweils weitere erste Validierungsinformation in einem weiteren zweiten Datenelement gespeichert wird,
- die jeweils weitere zweite Authentisierungsinformation jeweils in dem weiteren zweiten Datenelement gespeichert wird und an den mindestens einen Empfänger übermittelt wird, und
- die jeweils weitere zweite Validierungsinformation in einem weiteren dritten Datenelement gespeichert wird.

3. Verfahren nach einem der vorhergehenden Ansprüche, wobei
- eines der Datenelemente (310, 320, 330) mindestens zwei Authentisierungsinformationen umfasst; und
- für die mindestens zwei Authentisierungsinformationen (A1, A2) jeweils verschiedene Datenelemente (320, 330) eine zugehörige Validierungsinformation umfassen.

4. Verfahren nach einem der vorhergehenden Ansprüche, wobei
- weitere Authentisierungsinformationen entsprechend der mindestens einen ersten Authentisierungsinformation (A1) berechnet werden,
- die weiteren Authentisierungsinformationen und jeweils weitere Validierungsinformationen jeweils im dritten Datenelement (330) und/oder weiteren Datenelementen des Datenstroms gespeichert und übermittelt werden, und
- das Speichern und das Übermitteln der weiteren Authentisierungsinformationen und der jeweils weiteren Validierungsinformationen entsprechend dem Speichern und Übermitteln des ersten Datenelementes (310) und des zweiten Datenelementes (320) und/oder dem Speichern und Übermittelns des zweiten Datenelementes (320) und des dritten Datenelementes (330) erfolgt.

5. Verfahren nach einem der vorhergehenden Ansprüche, wobei
- das erste Datenelement (310) eine erste Prüfsumme (CKS1) über zumindest einen Teil des ersten Datenelements (310) umfasst; und
- das zweite Datenelement (320) ein erstes Geheimnis (CVR1) für eine Prüfung der ersten Prüfsumme (CSK1) umfasst.

6. Verfahren zum Authentisieren eines Senders eines Datenstroms durch einen Empfänger mit den Verfahrensschritten:
- Empfangen (210) mindestens eines ersten Datenelementes (310) des Datenstroms, wobei das mindestens eine erste Datenelement (310) jeweils eine erste Authentisierungsinformation (A1) umfasst;
- Empfangen (220) mindestens eines zweiten Datenelementes (320) des Datenstroms, wobei das mindestens eine zweite Datenelement (320) jeweils eine erste Validierungsinformation (V1) für die jeweilige erste Authentifizierungsinformation (A1) umfasst;
- Berechnen (230) jeweils einer ersten lokalen Authentisierungsinformation, wobei die jeweilige eine erste lokale Authentisierungsinformation mittels einer kryptographischen Einwegfunktion aus der jeweiligen ersten Validierungsinformation (V1) generiert wird;
- Vergleichen (240) der jeweils ersten lokalen Authentisierungsinformation mit der jeweiligen ersten Authentisierungsinformation (A1), wobei der Sender authentisiert wird, wenn die jeweilige erste lokale Authentisierungsinformation und die jeweilige erste Authentisierungsinformation (A1) eine ausreichende Übereinstimmung aufweisen.

7. Verfahren nach Anspruch 6, wobei
- das zweite Datenelement (320) eine Vielzahl von ersten Validierungsinformationen umfasst,
- jeweils ein weiteres erstes Datenelement jeweils eine weitere erste Authentisierungsinformation umfasst,
- für die jeweilige weitere erste Authentisierungsinformation jeweils eine weitere erste lokale Authentisierungsinformation entsprechend dem Berechnen der jeweils ersten lokalen Authentisierungsinformation berechnet wird; und
- ein Vergleichen der jeweiligen weiteren ersten Authentisierungsinformation mit deren jeweiligen weiteren lokalen ersten Authentisierungsinformation entsprechend dem Vergleichen der jeweiligen ersten lokalen Authentisierungsinformation mit der jeweiligen ersten Authentisierungsinformation erfolgt.

8. Verfahren nach Anspruch 6 oder 7, wobei
- das mindestens eine zweite Datenelement (320) jeweils eine zweite Authentisierungsinformation (A2) umfasst,
- mindestens ein drittes Datenelement (330) empfangen wird,
- das mindestens eine dritte Datenelement (330) jeweils eine zweite Validierungsinformation (V2) umfasst,
- jeweils eine zweite lokale Authentisierungsinformation berechnet wird,
- die jeweilige eine zweite lokale Authentisierungsinformation mittels der kryptographischen Einwegfunktion aus der jeweiligen zweiten Validierungsinformation (V2) generiert wird;
- Vergleichen der jeweils einen zweiten lokalen Authentisierungsinformation mit der jeweiligen zweiten Authentisierungsinformation (A2), wobei der Sender authentisiert wird, wenn die jeweilige zweite lokale Authentisierungsinformation und die jeweilige zweite Authentisierungsinformation (A2) eine ausreichende Übereinstimmung aufweisen.

9. Verfahren nach einem der Ansprüche 6 - 8, insbesondere Anspruch 8, wobei
- die Datenelemente (310, 320, 330) mindestens zwei Authentisierungsinformationen umfassen; und
- für die mindestens zwei Authentisierungsinformationen jeweils verschiedene Datenelemente eine zugehörige Validierungsinformation umfassen;
- für die jeweils eine zugehörige Validierungsinformation jeweils eine weitere lokale Authentisierungsinformation entsprechend dem Berechnen der jeweils ersten lokalen Authentisierungsinformation berechnet wird; und
- ein Vergleichen der mindestens zwei Authentisierungsinformationen mit den jeweiligen weiteren lokalen Authentisierungsinformationen entsprechend dem Vergleichen der jeweiligen ersten lokalen Authentisierungsinformation mit der jeweiligen ersten Authentisierungsinformation erfolgt.

10. Verfahren nach einem der Ansprüche 6 - 9, insbesondere Anspruch 8, wobei
- das mindestens eine dritte Datenelement (330) und/oder weitere Datenelemente jeweils eine weiteren Authentisierungsinformation umfasst;
- für die jeweilige weitere Authentisierungsinformation jeweils eine zweite lokale Authentisierungsinformation entsprechend dem Berechnen der jeweils ersten lokalen Authentisierungsinformation berechnet wird; und
- ein Vergleichen der jeweiligen weiteren Authentisierungsinformation mit deren jeweiligen zweiten lokalen Authentisierungsinformation entsprechend dem Vergleichen der jeweiligen ersten lokalen Authentisierungsinformation mit der jeweiligen ersten Authentisierungsinformation erfolgt.

11. Verfahren nach einem der vorhergehenden Ansprüche, wobei
- das erste Datenelement (310) eine erste Prüfsumme (CKS1) über zumindest einen Teil des ersten Datenelements (310) umfasst;
- das zweite Datenelement (320) ein erstes Geheimnis (CVR1) umfasst;
- eine Integrität des zumindest einen Teils des ersten Datenelements (310) anhand der ersten Prüfsumme (CKS1) und dem ersten Geheimnis (CVR1) geprüft wird.

12. Erzeugungsvorrichtung zum Erzeugen eines Datenstroms, dessen Sender authentisierbar ist, aufweisend:
- ein erstes Berechnungsmodul (710) zum Berechnen mindestens einer ersten Authentisierungsinformation (A1), wobei die mindestens eine erste Authentisierungsinformation (A1) mittels einer kryptographischen Einwegfunktion aus jeweils einer ersten Validierungsinformation (V1) generiert wird;
- ein erstes Speichermodul (720) zum Speichern der mindestens einen ersten Authentisierungsinformation (A1) jeweils in einem ersten Datenelement (310) des Datenstroms;
- ein erstes Übermittlungsmodul (730) zum Übermitteln des jeweiligen ersten Datenelements (310) an mindestens einen Empfänger;
- ein zweites Speichermodul (740) zum Speichern der jeweiligen ersten Validierungsinformation (V1) in jeweils einem zweiten Datenelement (320) des Datenstroms; und
- ein zweites Übermittlungsmodul (750) zum Übermitteln des jeweiligen zweiten Datenelements (320) an den mindestens einen Empfänger.

13. Authentisierungsvorrichtung zum Authentisieren eines Senders eines Datenstroms durch einen Empfänger aufweisend:
- ein erstes Empfangsmodul (810) zum Empfangen mindestens eines ersten Datenelementes (310) des Datenstroms, wobei das mindestens eine erste Datenelement (310) jeweils eine erste Authentisierungsinformation (A1) umfasst;
- ein zweites Empfangsmodul (820) zum Empfangen mindestens eines zweiten Datenelementes (320) des Datenstroms, wobei das mindestens eine zweite Datenelement jeweils eine erste Validierungsinformation (V1) für die jeweilige erste Authentifizierungsinformation (A1) umfasst;
- ein zweites Berechnungsmodul (830) zum Berechnen jeweils einer ersten lokalen Authentisierungsinformation, wobei die jeweilige eine erste lokale Authentisierungsinformation mittels einer kryptographischen Einwegfunktion aus der jeweiligen ersten Validierungsinformation (V1) generiert wird;
- ein erstes Vergleichsmodul zum Vergleichen der jeweils ersten lokalen Authentisierungsinformation mit der jeweiligen ersten Authentisierungsinformation (A1), wobei der Sender authentisiert wird, wenn die jeweilige erste lokale Authentisierungsinformation und die jeweilige erste Authentisierungsinformation (A1) eine ausreichende Übereinstimmung aufweisen.

14. System umfassend
- einen ersten Kommunikationspartner, aufweisend eine Erzeugungsvorrichtung nach Anspruch 12;
- mindestens einen zweiten Kommunikationspartner, aufweisend eine Authentisierungsvorrichtung nach Anspruch 13, wobei der erste Kommunikationspartner und der zweite Kommunikationspartner über ein Kommunikationsnetzwerk kommunikativ miteinander in Verbindung stehen.

15. Computerprogramm mit Programmbefehlen, die bei Ausführung durch einen Computer dazu führen, dass der Computer eines der Verfahren nach einem der Ansprüche 1 - 11 ausführt.

16. Computerprogrammprodukt, umfassend ein Programm, das auf einem maschinenlesbaren Medium gespeichert ist und das beim Laden in einen Computer die Ausführung der Verfahrensschritte 1-11 veranlasst.

17. Ein computerlesbares Medium, das Anweisungen speichert, die bei Ausführung durch einen Computer den Computer veranlassen, eine Methode der Ansprüche 1-11 auszuführen.

## Claims

1. Method for producing a data stream whose sender is authenticable, having the method steps of:
- computing (110) at least one first piece of authentication information, wherein the at least one first piece of authentication information (A1) is generated from a respective first piece of validation information (V1) by means of a cryptographic one way function;
- storing (120) the at least one first piece of authentication information (A1) in a respective first data element (310) of the data stream;
- transmitting (130) the respective first data element (310) to at least one receiver;
- computing at least one second piece of authentication information (A2), wherein the at least one second piece of authentication information (A2) is generated from a respective second piece of validation information (V2) by means of the cryptographic one way function;
- storing (140) the respective first piece of validation information (V1) in a respective second data element (320) of the data stream;
- storing the at least one second piece of authentication information (A2) in the respective second data element (320) of the data stream;
- storing the respective second piece of validation information (V2) in a respective third data element (330) of the data stream; and
- transmitting (150) the respective second data element (320) to the at least one receiver.

2. Method according to Claim 1, wherein
- a respective further first piece of authentication information and further second piece of authentication information are computed,
- the respective further first piece of authentication information is generated from a respective further first piece of validation information by means of the cryptographic one way function,
- the respective further second piece of authentication information is generated from a respective further second piece of validation information by means of the cryptographic one way function,
- the respective further first piece of authentication information is stored in a respective further first data element and is transmitted to the at least one receiver,
- the respective further first piece of validation information is stored in a further second data element,
- the respective further second piece of authentication information is stored in the respective further second data element and is transmitted to the at least one receiver, and
- the respective further second piece of validation information is stored in a further third data element.

3. Method according to either of the preceding claims, wherein
- one of the data elements (310, 320, 330) comprises at least two pieces of authentication information; and
- respective different data elements (320, 330) comprise an associated piece of validation information for the at least two pieces of authentication information (A1, A2).

4. Method according to one of the preceding claims, wherein
- further pieces of authentication information are computed in accordance with the at least one first piece of authentication information (A1),
- the further pieces of authentication information and respective further pieces of validation information are stored and transmitted in the respective third data element (330) and/or further data elements of the data stream, and
- the storing and transmitting of the further pieces of authentication information and of the respective further pieces of validation information is effected in accordance with the storing and transmitting of the first data element (310) and the second data element (320) and/or the storing and transmitting of the second data element (320) and the third data element (330).

5. Method according to one of the preceding claims, wherein
- the first data element (310) comprises a first checksum (CKS1) for at least one portion of the first data element (310); and
- the second data element (320) comprises a first secret (CVR1) for a check on the first checksum (CSK1).

6. Method for authenticating a sender of a data stream by means of a receiver, having the method steps of:
- receiving (210) at least one first data element (310) of the data stream, wherein the at least one first data element (310) comprises a respective first piece of authentication information (A1);
- receiving (220) at least one second data element (320) of the data stream, wherein the at least one second data element (320) comprises a respective first piece of validation information (V1) for the respective first piece of authentication information (A1);
- computing (230) a respective first piece of local authentication information, wherein the respective first piece of local authentication information is generated from the respective first piece of validation information (V1) by means of a cryptographic one way function;
- comparing (240) the respective first piece of local authentication information with the respective first piece of authentication information (A1), wherein the sender is authenticated if the respective first piece of local authentication information and the respective first piece of authentication information (A1) have sufficient concordance.

7. Method according to Claim 6, wherein
- the second data element (320) comprises a multiplicity of first pieces of validation information,
- a respective further first data element comprises a respective further first piece of authentication information,
- a respective further first piece of local authentication information is computed for the respective further first piece of authentication information in accordance with the computing of the respective first piece of local authentication information; and
- the respective further first piece of authentication information is compared with the respective further local first piece of authentication information thereof in accordance with the comparing of the respective first piece of local authentication information with the respective first piece of authentication information.

8. Method according to Claim 6 or 7, wherein
- the at least one second data element (320) comprises a respective second piece of authentication information (A2),
- at least one third data element (330) is received,
- the at least one third data element (330) comprises a respective second piece of validation information (V2),
- a respective second piece of local authentication information is computed,
- the respective second piece of local authentication information is generated from the respective second piece of validation information (V2) by means of the cryptographic one way function;
- the respective second piece of local authentication information is compared with the respective second piece of authentication information (A2), wherein the sender is authenticated if the respective second piece of local authentication information and the respective second piece of authentication information (A2) have sufficient concordance.

9. Method according to one of Claims 6-8, in particular Claim 8, wherein
- the data elements (310, 320, 330) comprise at least two pieces of authentication information; and
- respective different data elements comprise an associated piece of validation information for the at least two pieces of authentication information;
- a respective further piece of local authentication information is computed for the respective associated piece of validation information in accordance with the computing of the respective first piece of local authentication information; and
- the at least two pieces of authentication information are compared with the respective further pieces of local authentication information in accordance with the comparing of the respective first piece of local authentication information with the respective first piece of authentication information.

10. Method according to one of Claims 6-9, in particular Claim 8, wherein
- the at least one third data element (330) and/or further data elements comprises a respective further piece of authentication information;
- a respective second piece of local authentication information is computed for the respective further piece of authentication information in accordance with the computing of the respective first piece of local authentication information; and
- the respective further piece of authentication information is compared with the respective second piece of local authentication information thereof in accordance with the comparing of the respective first piece of local authentication information with the respective first piece of authentication information.

11. Method according to one of the preceding claims, wherein
- the first data element (310) comprises a first checksum (CKS1) for at least one portion of the first data element (310) ;
- the second data element (320) comprises a first secret (CVR1) ;
- an integrity of the at least one portion of the first data element (310) is checked on the basis of the first checksum (CKS1) and the first secret (CVR1).

12. Generation apparatus for producing a data stream whose sender is authenticable, having:
- a first computation module (710) for computing at least one first piece of authentication information (A1), wherein the at least one first piece of authentication information (A1) is generated from a respective first piece of validation information (V1) by means of a cryptographic one way function;
- a first memory module (720) for storing the at least one first piece of authentication information (A1) in a respective first data element (310) of the data stream;
- a first transmission module (730) for transmitting the respective first data element (310) to at least one receiver;
- a second memory module (740) for storing the respective first piece of validation information (V1) in a respective second data element (320) of the data stream; and
- a second transmission module (750) for transmitting the respective second data element (320) to the at least one receiver.

13. Authentication apparatus for authenticating a sender of a data stream by means of a receiver, having:
- a first reception module (810) for receiving at least one first data element (310) of the data stream, wherein the at least one first data element (310) comprises a respective first piece of authentication information (A1);
- a second reception module (820) for receiving at least one second data element (320) of the data stream, wherein the at least one second data element comprises a respective first piece of validation information (V1) for the respective first piece of authentication information (A1);
- a second computation module (830) for computing a respective first piece of local authentication information, wherein the respective first piece of local authentication information is generated from the respective first piece of validation information (V1) by means of a cryptographic one way function;
- a first comparison module for comparing the respective first piece of local authentication information with the respective first piece of authentication information (A1), wherein the sender is authenticated if the respective first piece of local authentication information and the respective first piece of authentication information (A1) have sufficient concordance.

14. System comprising
- a first communication partner, having a generation apparatus according to Claim 12;
- at least one second communication partner, having an authentication apparatus according to Claim 13, wherein the first communication partner and the second communication partner are communicatively connected to one another via a communication network.

15. Computer program having program commands that, when executed by a computer, result in the computer performing one of the methods according to one of Claims 1-11.

16. Computer program product, comprising a program that is stored on a machine-readable medium and that, when loaded into a computer, prompts the performance of method steps 1-11.

17. Computer-readable medium that stores instructions that, when executed by a computer, prompt the computer to perform a method of Claims 1-11.

## Revendications

1. Procédé pour générer un flux de données dont l'émetteur est authentifiable, comportant les étapes de procédé suivantes :
- calcul (110) d'au moins une première information d'authentification, l'au moins une première information d'authentification (A1) étant générée au moyen d'une fonction cryptographique à sens unique à partir de respectivement une première information de validation (V1) ;
- sauvegarde (120) de l'au moins une première information d'authentification (A1) respectivement dans un premier élément de données (310) du flux de données ;
- transmission (130) du premier élément de données respectif (310) à au moins un récepteur ;
- calcul d'au moins une deuxième information d'authentification (A2), l'au moins une deuxième information d'authentification (A2) étant générée au moyen de la fonction cryptographique à sens unique à partir de respectivement une deuxième information de validation (V2) ;
- sauvegarde (140) de la première information de validation (V1) respective dans respectivement un deuxième élément de données (320) du flux de données ;
- sauvegarde de l'au moins une deuxième information d'authentification (A2) respectivement dans le deuxième élément de données (320) du flux de données ;
- sauvegarde de la deuxième information de validation respective (V2) dans respectivement un troisième élément de données (330) du flux de données ; et
- transmission (150) du deuxième élément de données respectif (320) à l'au moins un récepteur.

2. Procédé selon la revendication 1,
- respectivement une autre première information d'authentification et une autre deuxième information d'authentification étant calculées ;
- l'autre première information d'authentification respective étant générée au moyen de la fonction cryptographique à sens unique à partir de respectivement une autre première information de validation ;
- l'autre deuxième information d'authentification respective étant générée au moyen de la fonction cryptographique à sens unique à partir de respectivement une autre deuxième information de validation ;
- l'autre première information d'authentification respective étant sauvegardée respectivement dans un autre premier élément de données et transmise à l'au moins un récepteur ;
- l'autre première information de validation respective étant sauvegardée dans un autre deuxième élément de données ;
- l'autre deuxième information d'authentification respective étant sauvegardée respectivement dans l'autre deuxième élément de données et transmise à l'au moins un récepteur et
- l'autre deuxième information de validation respective étant sauvegardée dans un autre troisième élément de données.

3. Procédé selon l'une des revendications précédentes,
- un des éléments de données (310, 320, 330) comprenant au moins deux informations d'authentification et
- pour les au moins deux informations d'authentification (A1, A2), respectivement différents éléments de données (320, 330) comprenant une information de validation associée.

4. Procédé selon l'une des revendications précédentes,
- d'autres informations d'authentification étant calculées conformément à l'au moins une première information d'authentification (A1) ;
- les autres informations d'authentification et d'autres informations de validation respectives étant sauvegardées respectivement dans le troisième élément de données (330) et/ou d'autres éléments de données du flux de données, et transmises, et
- la sauvegarde et la transmission des autres informations d'authentification et des autres informations de validation respectives se faisant conformément à la sauvegarde et à la transmission du premier élément de données (310) et du deuxième élément de données (320) et/ou à la sauvegarde et à la transmissions du deuxième élément de données (320) et du troisième élément de données (330).

5. Procédé selon l'une des revendications précédentes,
- le premier élément de données (310) comprenant une première somme de contrôle (CKS1) relative à au moins une partie du premier élément de données (310) et
- le deuxième élément de données (320) comprenant un premier secret (CVR1) pour un contrôle de la première somme de contrôle (CSK1).

6. Procédé d'authentification d'un émetteur d'un flux de données par un récepteur, comportant les étapes de procédé suivantes :
- réception (210) d'au moins un premier élément de données (310) du flux de données, l'au moins un premier élément de données (310) comprenant respectivement une première information d'authentification (A1) ;
- réception (220) d'au moins un deuxième élément de données (320) du flux de données, l'au moins un deuxième élément de données (320) comprenant respectivement une première information de validation (V1) pour la première information d'authentification respective (A1) ;
- calcul (230) de respectivement une première information d'authentification locale, l'une première information d'authentification locale respective étant générée au moyen d'une fonction cryptographique à sens unique à partir de la première information de validation respective (V1) ;
- comparaison (240) de la première information d'authentification locale respective avec la première information d'authentification respective (A1), l'émetteur étant authentifié lorsque la première information d'authentification locale respective et la première information d'authentification respective (A1) présentent une coïncidence suffisante.

7. Procédé selon la revendication 6,
- le deuxième élément de données (320) comprenant une pluralité de premières informations de validation ;
- respectivement un autre premier élément de données comprenant respectivement une autre première information d'authentification ;
- pour l'autre première information d'authentification respective étant calculée respectivement une autre première information d'authentification locale conformément au calcul de la première information d'authentification locale respective et
- une comparaison de l'autre première information d'authentification respective avec son autre première information d'authentification locale respective se faisant conformément à la comparaison de la première information d'authentification locale respective avec la première information d'authentification respective.

8. Procédé selon la revendication 6 ou 7,
- l'au moins un deuxième élément de données (320) comprenant respectivement une deuxième information d'authentification (A2) ;
- au moins un troisième élément de données (330) étant reçu ;
- l'au moins un troisième élément de données (330) comprenant respectivement une deuxième information de validation (V2) ;
- respectivement une deuxième information d'authentification locale étant calculée ;
- l'une deuxième information d'authentification locale respective étant générée au moyen de la fonction cryptographique à sens unique à partir de la deuxième information de validation respective (V2) ;
- comparaison de l'une deuxième information d'authentification locale respective avec la deuxième information d'authentification respective (A2), l'émetteur étant authentifié lorsque la deuxième information d'authentification locale respective et la deuxième information d'authentification respective (A2) présentent une coïncidence suffisante.

9. Procédé selon l'une des revendications 6 - 8, et plus particulièrement selon la revendication 8,
- les éléments de données (310, 320, 330) comprenant au moins deux informations d'authentification et
- pour les au moins deux informations d'authentification, respectivement différents éléments de données comprenant une information de validation associée ;
- pour la respectivement une information de validation associée, respectivement une autre information d'authentification locale étant calculée conformément au calcul de la première information d'authentification locale respective et
- une comparaison des au moins deux informations d'authentification avec les autres informations d'authentification locales respectives se faisant conformément à la comparaison de la première information d'authentification locale respective avec la première information d'authentification respective.

10. Procédé selon l'une des revendications 6 - 9, et plus particulièrement selon la revendication 8,
- l'au moins un troisième élément de données (330) et/ou d'autres éléments de données comprenant respectivement une autre information d'authentification ;
- pour l'autre information d'authentification respective étant calculée respectivement une deuxième information d'authentification locale conformément au calcul de la première information d'authentification locale respective et
- une comparaison de l'autre information d'authentification respective avec sa deuxième information d'authentification locale respective se faisant conformément à la comparaison de la première information d'authentification locale respective avec la première information d'authentification respective.

11. Procédé selon l'une des revendications précédentes,
- le premier élément de données (310) comprenant une première somme de contrôle (CKS1) relative à au moins une partie du premier élément de données (310) ;
- le deuxième élément de données (320) comprenant un premier secret (CVR1) ;
- une intégrité de l'au moins une partie du premier élément de données (310) étant contrôlée à l'aide de la première somme de contrôle (CKS1) et du premier secret (CVR1).

12. Dispositif de génération pour générer un flux de données dont l'émetteur est authentifiable, comportant :
- un premier module de calcul (710) pour calculer au moins une première information d'authentification (A1), l'au moins une première information d'authentification (A1) étant générée au moyen d'une fonction cryptographique à sens unique à partir de respectivement une première information de validation (V1) ;
- un premier module de mémoire (720) pour sauvegarder l'au moins une première information d'authentification (A1) respectivement dans un premier élément de données (310) du flux de données ;
- un premier module de transmission (730) pour transmettre le premier élément de données respectif (310) à au moins un récepteur ;
- un deuxième module de mémoire (740) pour sauvegarder la première information de validation respective (V1) dans respectivement un deuxième élément de données (320) du flux de données et
- un deuxième module de transmission (750) pour transmettre le deuxième élément de données respectif (320) à l'au moins un récepteur.

13. Dispositif d'authentification pour authentifier un émetteur d'un flux de données par un récepteur, comportant :
- un premier module de réception (810) pour recevoir au moins un premier élément de données (310) du flux de données, l'au moins un premier élément de données (310) comprenant respectivement une première information d'authentification (A1) ;
- un deuxième module de réception (820) pour recevoir au moins un deuxième élément de données (320) du flux de données, l'au moins un deuxième élément de données comprenant respectivement une première information de validation (V1) pour la première information d'authentification respective (A1) ;
- un deuxième module de calcul (830) pour calculer respectivement une première information d'authentification locale, l'une première information d'authentification locale respective étant générée au moyen d'une fonction cryptographique à sens unique à partir de la première information de validation respective (V1) ;
- un premier module de comparaison pour comparer la première information d'authentification locale respective avec la première information d'authentification respective (A1), l'émetteur étant authentifié lorsque la première information d'authentification locale respective et la première information d'authentification respective (A1) présentent une coïncidence suffisante.

14. Système comprenant :
- un premier partenaire de communication comportant un dispositif de génération selon la revendication 12 ;
- au moins un deuxième partenaire de communication comportant un dispositif d'authentification selon la revendication 13, le premier partenaire de communication et le deuxième partenaire de communication étant reliés communicativement entre eux via un réseau de communication.

15. Programme informatique avec des commandes de programme qui, lors de l'exécution par un ordinateur, entraînent que l'ordinateur exécute un des procédés selon l'une des revendications 1 - 11.

16. Produit de programme informatique comprenant un programme qui est sauvegardé sur un support lisible par machine et qui fait exécuter les étapes de procédé 1 - 11 lors du chargement dans un ordinateur.

17. Un support lisible par ordinateur qui sauvegarde des instructions qui, lors de l'exécution par un ordinateur, font exécuter un procédé des revendications 1 - 11.
